# EUROPEAN PATENT SPECIFICATION

(11) **EP 2 789 506 B1**
(45) Date of publication and mention of the grant of the patent: **27.12.2017**
(21) Application number: 14163909.6
(22) Date of filing: 08.04.2014
(51) Int. Cl.: B60R 5/04, B60R 13/01

(54) **VEHICLE BOOT**
FAHRZEUGKOFFERRAUM
COFFRE DE VÉHICULE

(30) Priority: 09.04.2013 GB 201306375
(43) Date of publication of application: 15.10.2014
(73) Proprietor: Nissan Motor Manufacturing (UK) Ltd., Cranfield Bedfordshire MK43 0DB (GB)
(72) Inventor: Hockaday, Peter, Cranfield, Bedfordshire MK430DB (GB)

(56) References cited:
- WO-A2-01/89878
- FR-A1- 2 870 495
- US-A1- 2005 088 009

## Description

The present invention relates to a vehicle including a luggage storage space.

Some vehicles, for example some cars, have a luggage storage space that is commonly referred to as a boot (or trunk). The boot is typically located towards the rear of the vehicle. Some of these vehicles include at least one luggage board, which provides a removable base or floor on which articles of luggage can be loaded. "Luggage" is used in a broad sense to mean any article that can be transported in the storage area, and may for example include bags, suit cases, shopping, or sports equipment.

The boot of a vehicle typically includes lateral trim elements that are arranged to cover at least a portion of the lateral sides of the vehicle. The trim elements typically cover at least a portion of at least one of the following: a vehicle side wall, a wheel arch, and components relating to the fuel storage system, such as a filler pipe. Traditionally the lateral trim elements have been arranged in the vehicle such that the boot appears to be substantially symmetrical about a longitudinal centre line of the vehicle. This is to provide an aesthetically pleasing appearance to the user of the vehicle.

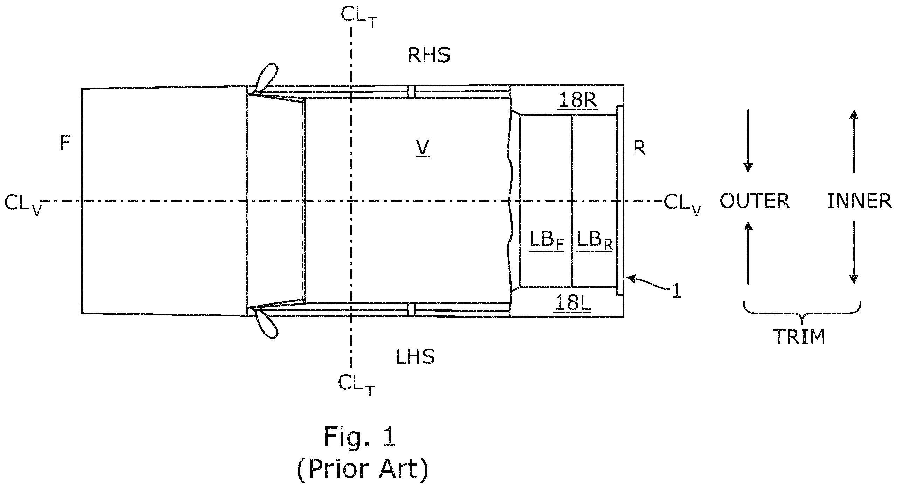

Figure 1 shows a schematic, part cut away plan view of a known vehicle V fitted with luggage boards LB_{F} and LB_{R}, allowing flexible use of the luggage area 1. The vehicle V is shown with a longitudinal centre line CL_{V}, a transverse centre line CL_{T}, a front end F and a rear end R; a left-hand lateral side LHS and a corresponding right-hand side RHS; front and rear luggage boards LB_{F} and LB_{R}; and left and right interior trim elements (or panels) 18L and 18R in the boot area. The directions indicated by the terms "outer" and "inner", as applied to trim panels 18, are also shown: "outer" being a visible surface facing the luggage compartment; and "inner" being a hidden surface facing the vehicle body shell.

The left lateral side of the boot is usually different from the right lateral side of the boot, because equipment relating to the fuel storage system, such as a fuel filler pipe (and in older vehicles the fuel tank), is typically only located on one lateral side of the vehicle. Despite this assymetry, the left and right side trim elements 18L, 18R are arranged substantially identically, though opposite handed, to hide the lack of symmetry behind the trim. Hence, the distance from an outer surface of the left side trim element 18L to the centre line of the vehicle CL_{V} is substantially equal to the distance from an outer surface of the right side trim element 18R to the centre line of the vehicle. However on one lateral side of the vehicle, the side opposite to where the fuel storage system components are located, there is a cavity behind the trim element, which is wasted space.

In recent years there has been increased environmental awareness, which has made car manufacturers look very carefully at ways in which they can improve the design of vehicles. One significant pressure is to produce vehicles that are smaller and lighter than current vehicles. But there is still the practical need to provide a sufficient amount of storage space within the vehicle for users to store luggage.

A solution to this problem is to provide a boot that is asymmetrical about the longitudinal centre line CL_{V} of the vehicle, to make better use of the overall space available. In this arrangement, the distance between the left hand side trim element 18L and the longitudinal centre line CL_{V} of the vehicle is different to the distance between the right hand side trim element 18R and the longitudinal centre line CLy.

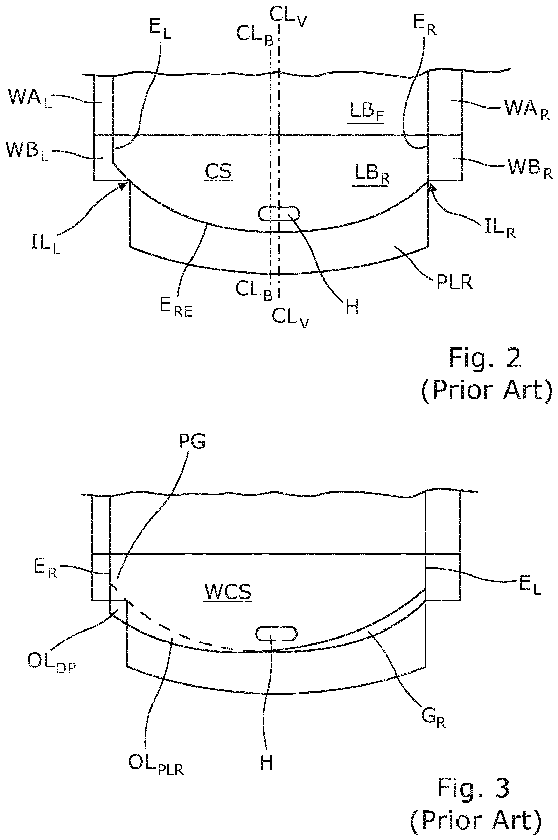

However, the inventors have discovered that a problem arises in vehicles having an asymmetrical boot, a curved plate luggage rear mating surface (this is the rear most inner boot surface, at a forward edge of the lower surface of the tailgate or bootlid opening, that engages the rear edge of the luggage board), and a luggage board having a curved rear edge. With prior art arrangements, it is only possible to insert the luggage board into the vehicle in one operational orientation, because of the interaction between the curved rear edge of the board and the curved mating surface of the plate luggage rear. This restricts the luggage board to presenting to the user either a wipe clean surface or a carpeted surface, but not offering a choice between the two - which is easily arranged in a symmetrical boot space by inverting (reversing) the board. This problem of lack of reversibility of the luggage board is illustrated in Figures 2 and 3, which are schematic plan views of a vehicle luggage area in a prior art vehicle, such as a hatchback/estate/crossover/SUV type vehicle; that is, a vehicle which has D pillars.

Figure 2 shows front LB_{F} and rear LB_{R} luggage boards that are arranged asymmetrically with respect to the longitudinal centre line of the vehicle CL_{V}, since both extend further to the left of the vehicle centre line CL_{V} than to its right. This is allowed by the left wheel arch cover WA_{L} being slimmer than the right wheel arch cover WA_{R}, because the fuel filler pipe (not shown) is located adjacent the right wheel arch. This layout optimizes usable luggage space and minimizes "hidden" space behind the trim.

It can be seen in this arrangement that the rear edge E_{RE} of the rear luggage board LB_{R} is asymmetrical about a centre line CL_{B} of the rear luggage board LB_{R} - notice the different shapes of left (WB_{L}) and right (WB_{R}) wet bins, located behind the wheel arches - and that the plate luggage rear PLR is symmetrical about the centre line of the vehicle CL_{V}.

The plate luggage rear PLR has the same width (across the vehicle) as the tailgate opening. So the intersect line right IL_{R} corresponds to the right hand side of the tailgate, the inside edge of the D pillar (not shown), and the right edge E_{R} of the luggage board rear. However the left edge E_{L} of the rear luggage board LB_{R} is inset behind the D pillar, to the left of the intersect line left IL_{L} between tailgate and D pillar.

In Figure 2 the rear luggage board LB_{R} is shown carpet side CS up - i.e. showroom condition.

In Figure 3 the rear luggage board LB_{R} is shown in the reverse orientation, that is with the carpet side CS down and a wipe clean surface WCS facing upwards. This is achieved by a user inverting (rotating through 180 degrees) the rear luggage board LB_{R}. The left edge E_{L} which is on the left side of the car in Figure 2 is located on the right side of the car in Figure 3, and is constrained to butt up against the right side wet bin WB_{R}.

This forces the rear luggage board LB_{R} across the vehicle, as can be seen by the position of the handle H. This in turn pushes the right edge E_{R} (now on the left of the vehicle) past intersect line IL_{L}, leading to an overlap OL_{DP} with the vehicle's D pillar (not shown); i.e. the rear luggage board LB_{R} does not fit into the vehicle with the wipe clean surface WCS facing upwards, and is therefore not reversible. There is also an overlap OL_{PLR} with the plate luggage rear PLR; and a gap G_{R} on the right side between the rear luggage board and the plate luggage rear.

If the rear luggage board LB_{R} is lifted up to overlap the right wet bin WB_{R}, the rear edge E_{RE} of the rear luggage board LB_{R} may fit within the curve of the plate luggage rear PLR in some arrangements, thereby resolving the D pillar overlap OL_{DP} and right side gap G_{R}, but there are several drawbacks:
1. clonks and rattles as the luggage board jiggles vertically against the wet bin WB_{R};
2. impedance of access to the wet bin WB_{R};
3. a potential gap PG in the flat luggage floor on the left hand side of the vehicle; and
4. the arrangement is unsightly since the rear luggage board LB_{R} is not located in its intended location, and does not match the curvature of the plate luggage rear.

Hence, arrangements having a symmetrical plate luggage rear PLR and a rear luggage board having an asymmetrical rear edge E_{RE} prevent the board LB_{R} from being reversible, which is a drawback for the user. This conflict could be avoided by having a rectangular luggage board and a linear plate luggage rear; but this would require unacceptable compromises in vehicle styling and aerodynamic performance. Although the front luggage board LB_{F} is readily reversible (being rectangular, and symmetrical about its longitudinal and transverse axes), this is less useful to a vehicle operator than a reversible rear luggage board LB_{R}, as it is further away from the tailgate or bootlid; and is thus harder to reach.

US 2005/088,009A1 discloses a vehicle luggage board which is reversible in use.

Accordingly, the present invention seeks to mitigate at least one of the above-mentioned problems, or at least to provide an alternative vehicle to known vehicles.

According to one aspect of the invention, there is provided a vehicle having a longitudinal centre line and including a luggage storage space, said storage space being bounded by a forward edge of a tailgate opening lower surface, which forward edge includes a curvilinear profile; and by a luggage board having a longitudinal centre line and having a first load bearing surface that is arranged to provide an area on which articles of luggage can be placed when the luggage board is placed into the luggage space in a first orientation, a second load bearing surface that is arranged to provide an area on which articles of luggage can be placed when the luggage board is placed into the storage space in a second orientation, and having a luggage board rear edge which includes a curvilinear profile, and is substantially symmetrical about the longitudinal centre line of the rear luggage board; wherein the curvilinear profile of the forward edge of the tailgate opening lower surface substantially matches the curvilinear profile of a substantial part of the rear edge of the luggage board when the luggage board is in the first and second orientations; and the luggage board has a width across the vehicle greater than the width of the tailgate opening lower surface; characterized in that: the longitudinal centre line of the luggage board is offset from the longitudinal centre line of the vehicle in both first and second orientations of the luggage board; and in that: the forward edge of the tailgate opening lower surface is asymmetrical about a longitudinal centre line of the vehicle.

The invention enables the vehicle to maximize the luggage space available to a user, and allows the luggage board to be reversible.

The tailgate opening lower surface may be asymmetrical about the longitudinal centre line of the luggage board.

The vehicle luggage space may be asymmetrical about the longitudinal centre line of the vehicle. Typically, this is characterised in that the distance between a first luggage space wheel arch (or a trim covering same) and the longitudinal centre line of the vehicle is different from the distance between a second luggage space wheel arch (or a trim covering same) and the longitudinal centre line of the vehicle.

The luggage board rear edge is substantially complementary to the mating surface of the forward edge of the tailgate opening lower surface in the first and second orientations of the rear luggage board, along substantially the full length of the mating surface. The rear edge abuts the mating surface on the vehicle body structure.

Advantageously, the centre line of the luggage board can be substantially parallel with the longitudinal centre line of the vehicle.

Advantageously, the curvilinear profile of the plate luggage rear mating surface can include an arc. Advantageously, the curvilinear profile of the plate luggage rear mating surface can be substantially arcuate along its length. Advantageously, the centre point of the arc lies substantially on, or adjacent to, the centre line of the luggage board. The centre point can be located on, or off, the luggage board depending on the radius selected to define the arc and the depth (measured along the vehicle) of the luggage board. This helps to provide an asymmetrical plate luggage rear that matches a symmetrical luggage board.

Advantageously, the minimum depth of the plate luggage rear can be substantially aligned with the centre line of the luggage board in at least one of, and preferably both of, the first and second orientations. The minimum depth is the shallowest part of the curvilinear profile of the plate luggage rear mating surface, when viewed in plan from above. The minimum depth is where a line that is substantially parallel to a transverse centre line of the vehicle is tangential to the mating surface. (In this context, the depth is measured along the vehicle.)

Advantageously, the minimum depth of the plate luggage rear can be substantially aligned with a maximum depth (along the vehicle) of the luggage board in at least one of, and preferably both of, the first and second orientations.

Advantageously, the minimum depth of the plate luggage rear can be offset from the longitudinal centre line of the vehicle.

Advantageously, the plate luggage rear mating surface can include a first end, which is located on a first side of the longitudinal centre line of the vehicle, and a second end, which is located on a second side of the longitudinal centre line of the vehicle. The first end can be located further into the boot in the forwards direction than the second end. The luggage board can be dimensioned such that it extends beyond at least one of the first and second ends of the plate luggage rear in a transverse direction. Thus at least one lateral side of the luggage board extends beyond the plate luggage rear, typically into a space that is in line with a D pillar (where the vehicle has one) in a longitudinal direction. This provides a load bearing surface for a part of the luggage space that is not aligned with the plate luggage rear.

Advantageously, at least one lateral side of the luggage board can abut a wheel arch; or a trim element that covers the wheel arch. Typically, both lateral sides abut a respective wheel arch; or a trim element that covers that wheel arch. Alternatively or additionally, at least one lateral side of the luggage board can abut a storage bin located behind the wheel arch.

Advantageously, the curvilinear profile of the rear edge of the luggage board can include an arc. Advantageously, the curvilinear profile of the rear edge of the luggage board can be substantially arcuate along its length. The centre point of the arc lies substantially on, or adjacent to, the centre line of the luggage board. The centre point can be located on, or off, the luggage board depending on the radius selected to define the arc and the depth (along the vehicle) of the luggage board. This helps to match the symmetrical rear edge with the asymmetrical mating surface.

Advantageously, the maximum depth of the luggage board can be substantially aligned with the longitudinal centre line of the luggage board. In this context, the depth of the board is measured along, or parallel to, the longitudinal centre line of the vehicle.

Advantageously, the first load bearing surface can include a textile covering, such as a carpet.

Advantageously, the second load bearing surface can include a wipe clean surface, such as a plastics surface.

The luggage board can include a lifting handle. The lifting handle can be arranged substantially symmetrically about the longitudinal centre line of the vehicle when the luggage board is in the first orientation. This enables, for example, the handle to be centrally aligned in the vehicle when the carpet side is oriented upwards to provide a high quality appearance in "showroom condition". The centre of the lifting handle can be offset from the longitudinal centre line of the vehicle when the luggage board is in the second orientation. (the wipe clean surface is not the best "look" in the showroom.) The centre of the lifting handle can be offset from the centre line of the luggage board.

Advantageously, the luggage board can include at least one of the following: a substantially rectilinear front edge; a substantially rectilinear first side edge; and a substantially rectilinear second side edge.

Advantageously, at least one of the first and second load bearing surfaces is substantially planar; or includes a substantially planar portion.

Advantageously, the first load bearing surface is arranged substantially opposite to the second load bearing surface. In order to change the luggage board between the first and second orientations, the board is inverted (rotated through 180 degrees); from the first orientation wherein the first (carpeted) load bearing surface faces upwards, to the second orientation wherein the second (wipe clean) load bearing surface faces upwards. In both the first and second orientations, the rear edge of the luggage board mates with the mating surface of the plate luggage rear.

Advantageously, the vehicle can include a second luggage board. The first luggage board is a rear luggage board, and the second luggage board is a front luggage board.

An embodiment of the invention will now be described, by way of example only, with reference to the drawings, in which:
Figure 1 is a schematic plan view of a first prior art vehicle having a symmetrical boot;
Figure 2 is a schematic plan view of part of a second prior art vehicle having an asymmetrical boot, with a rear luggage board located therein in a first orientation; and
Figure 3 is a schematic plan view of the vehicle of Figure 2, with the rear luggage board located therein in a second orientation;

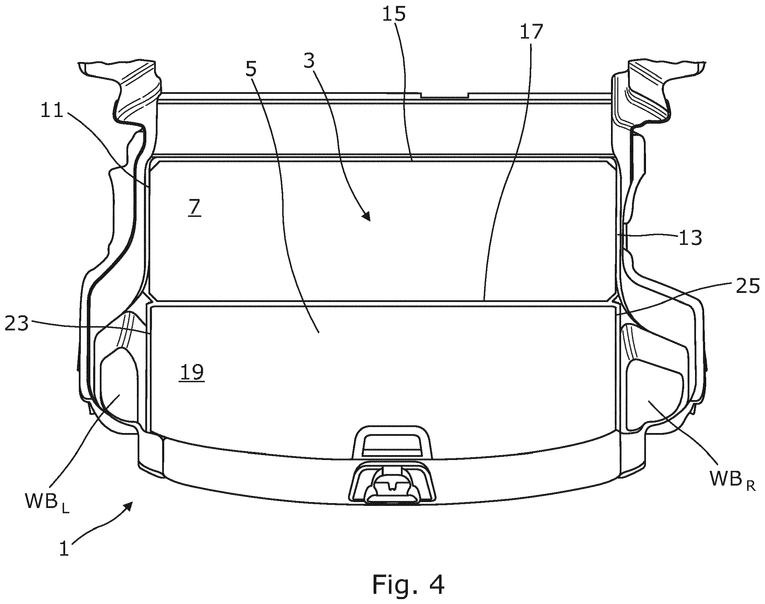

Figure 4 is a schematic plan view of part of a vehicle arranged according to the invention, with a luggage board located therein in a first orientation;

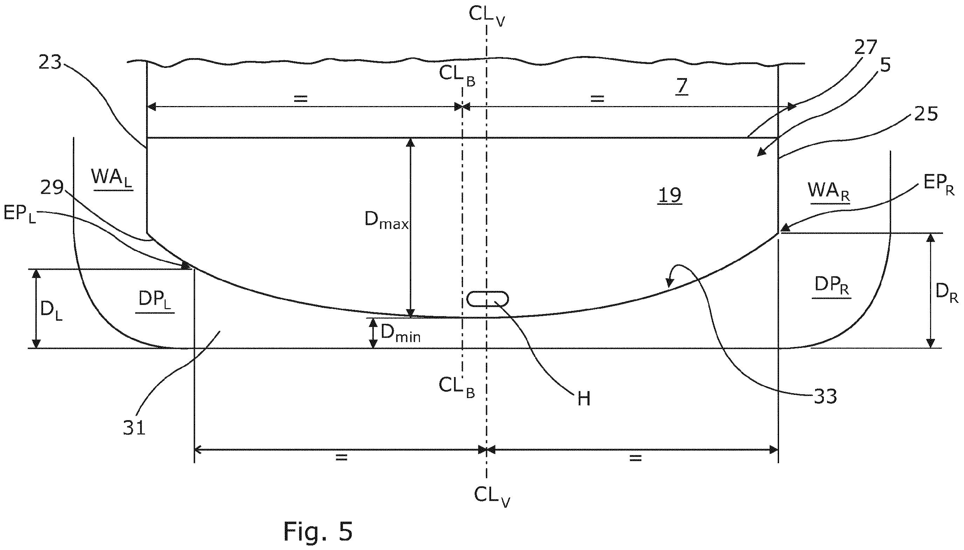

Figure 5 is an enlarged schematic plan view of part of the vehicle of Figure 4, with the luggage board located therein in the first orientation; and

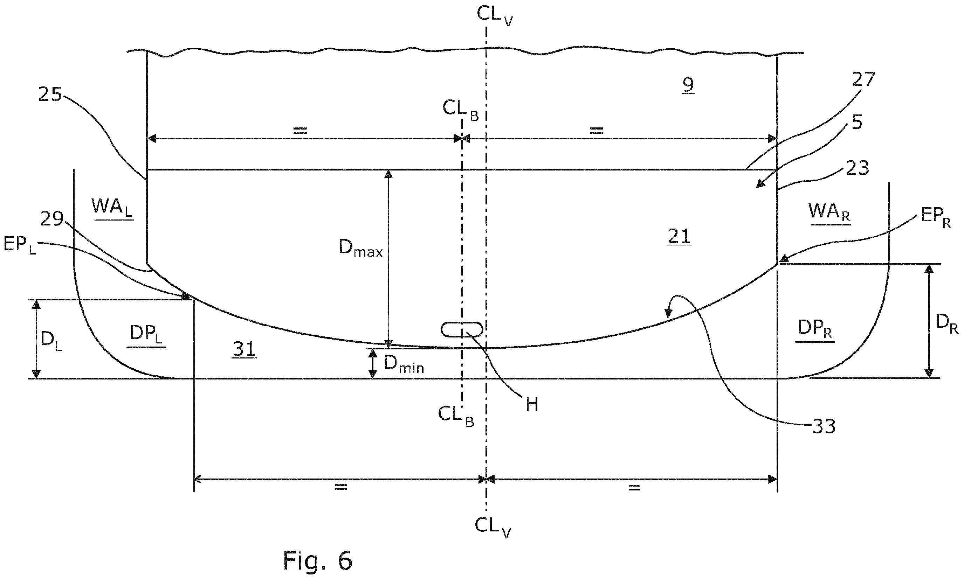

Figure 6 is an enlarged schematic plan view similar to Figure 5, but with the luggage board located therein in a second orientation.
Figures 4 to 6 show part of a vehicle V that is arranged according to the present invention. The vehicle V includes a luggage storage space 1, which is commonly referred to as a boot or trunk.

The boot 1 includes front and rear luggage boards 3,5, on which articles of luggage can be placed. Both boards are reversible.

The front luggage board 3 includes first and second load bearing surfaces 7 and 9 (Fig. 6), and four edges: first and second lateral edges 11, 13, a front edge 15 and a rear edge 17. The first and second lateral edges 11, 13 of the front board are arranged substantially rectilinearly. The first lateral edge 11 is arranged substantially parallel with the second lateral edge 13. The front and rear edges 15, 17 of the front board are arranged substantially rectilinearly. The front edge 15 is arranged substantially parallel with the rear edge 17.

The rear luggage board 5 includes first and second load bearing surfaces 19 and 21 (Fig. 6), and four edges: first and second lateral edges 23, 25, a front edge 27 and a rear edge 29. The first and second lateral edges 23, 25 of the rear board are arranged substantially rectilinearly. The first lateral edge 23 is arranged substantially parallel with the second lateral edge 25. The front edge 27 of the rear board is arranged substantially rectilinearly. The rear edge 29 of the rear board is curvilinear. The rear edge 29 of the rear board is substantially symmetrical about a centre line CL_{B} of the board (see Figure 5). The centre line CL_{B} of the rear board is substantially equi-distant between the first and second lateral edges 23, 25. The centre line CL_{B} of the rear board is substantially perpendicular to the front edge 27. In preferred arrangements, when viewed in plan, the curvilinear shape of the rear edge 29 is defined by an arc having a centre point that lies substantially on the centre line CL_{B} of the rear board (either on or off the board depending on the radius selected). Thus the maximum depth Dₘₐₓ of the rear board corresponds with the centre line CL_{B} of the rear board.

The front and rear luggage boards 3, 5 are removably mountable within the boot into predefined normal locations, and are supported by formations such as partitions (not shown); such that each of the boards is substantially horizontal, with one of the load bearing surfaces facing upwards. The front edge 15 of the front luggage board is located adjacent to the rear seats. The front edge 27 of the rear luggage board abuts the rear edge 17 of the front luggage board, and is arranged substantially parallel thereto.

The predefined normal location for the rear luggage board 5 includes a vehicle plate luggage rear 31, which provides a mating surface 33 that mates with the rear edge 29 of the rear luggage board. The mating surface 33 is curvilinear. The mating surface 33 of the plate luggage rear is asymmetrical about the longitudinal centre line CL_{V} of the vehicle. It can be seem in Figures 5 and 6, that the distance D_{R} that the right hand side end point EP_{R} of the mating surface 33 extends longitudinally into the boot 1 of the vehicle is greater than the distance D_{L} that the left hand side end point EP_{L} extends into the boot. The luggage board 5 is dimensioned such that one lateral portion extends beyond a respective end point EP_{R}, EP_{L} of the mating surface (to the left hand side in Figures 5 and 6). That is, the luggage board extends beyond the end of the plate luggage rear mating surface in a direction that is substantially perpendicular to the longitudinal centre line of the vehicle. Thus, one lateral side of the luggage board extends beyond the plate luggage rear 31 towards a wheel arch cover WA_{L}, WA_{R}; typically into a space that is in line with a D pillar (DP_{L} or DP_{R}) in a longitudinal direction. Thus the luggage board 5 is arranged to provide a load bearing surface 19, 21 in a part of the luggage space that is available because of the asymmetrical arrangement of the luggage space.

The minimum depth Dₘᵢₙ of the plate luggage rear is substantially aligned with the centre line CL_{B} of the rear luggage board, when the rear luggage board 5 is located in its normal location. Thus the minimum depth Dₘᵢₙ is offset from the longitudinal centre line CL_{V} of the vehicle. In preferred arrangements, when viewed in plan, the curvilinear shape of the plate luggage rear mating surface 33 is defined by an arc having a centre point that substantially lies on the centre line CL_{B} of the board (either on or off the board depending on the radius selected).

It can be seen in Figures 5 and 6 that when the rear luggage board 5 is positioned in its normal location, the centre line CL_{B} of the rear luggage board is offset from the longitudinal centre line CL_{V} of the vehicle. The centre line CL_{B} of the rear luggage board is arranged substantially parallel with the longitudinal centre line CL_{V} of the vehicle, when positioned in its normal location.

The arrangement of the predefined locations and the front and rear luggage boards 3,5 is such that the front and rear boards 3,5 are reversible. That is, front board 3 is positionable in its predefined normal location in a first orientation wherein the first load bearing surface 7 faces upwards, and the second load bearing surface 9 faces downwards; and in a second orientation wherein the second load bearing surface 9 faces upwards, and the first load bearing surface 7 faces downwards. The rear board 5 is positionable in its predefined normal location in a first orientation wherein the first load bearing surface 19 faces upwards, and the second load bearing surface 21 faces downwards; and in a second orientation wherein the second load bearing surface 21 faces upwards, and the first load bearing surface 19 faces downwards.

It can be seen from Figures 5 and 6, that the minimum depth Dₘᵢₙ of the plate luggage rear mating surface is substantially aligned with the centre line CL_{B} of the rear board, and hence the maximum depth Dₘₐₓ of the board, when the rear board 5 is oriented in the first and second orientations.

The combination of the rear luggage board 5 having a symmetrical rear edge 29 about the centre line CL_{B} of the board, a plate luggage rear mating surface 33 that is asymmetrical about the longitudinal centre line CL_{V} of the vehicle, and the centre line CL_{B} of the board being offset from the centre line CL_{V} of the vehicle provides a particularly beneficial arrangement, since it enables use of an asymmetrical boot in order to maximize luggage space, while allowing the luggage board to be reversible.

The rear luggage board 5 includes a handle H. The handle H is located adjacent the rear edge 29. A centre line of the handle H is offset from the centre line CL_{B} of the rear board. The arrangement is such that when the rear board 5 is located in the vehicle V with the first (carpeted) load bearing surface 19 facing upwards, the centre line of the handle H is substantially aligned with the longitudinal centre line of the vehicle CL_{V}. However, when the rear board 5 is located in the vehicle V with the second (wipe clean) load bearing surface 21 facing upwards, the centre line of the handle H is offset from the longitudinal centre line of the vehicle CL_{V}.

It will be appreciated by the skilled person that modifications can be made to the above embodiment which still fall within the scope of the invention. For example, the arrangement shown in Figures 5 and 6 with the rear luggage board overhanging the end point EP_{L} of the plate luggage rear mating surface on the left hand side, can be reversed such that the luggage board 5 overhangs the right hand side end point EP_{R} (including corresponding adaptations to the arrangement of the plate luggage rear), for example according to the arrangement of the fuel system in the vehicle.

Curvilinear profiles for the rear edge 29 and the mating surface 33 other than an arc shape can be used, however the arc shape is preferred.

## Claims

1. A vehicle (V) having a longitudinal centre line (CLv) and including a luggage storage space (1), said storage space being bounded by a forward edge (33) of a tailgate opening lower surface, which edge includes a curvilinear profile; and by a luggage board (5) having a longitudinal centre line (CL_{B}) and having first (19) and second (21) load bearing surfaces that are each arranged to provide an area on which articles of luggage can be placed when the luggage board (5) is placed into the luggage space (1) in first and second orientations respectively, and having a luggage board rear edge (29) which includes a curvilinear profile, and is substantially symmetrical about the longitudinal centre line (CL_{B}) of the rear luggage board;
wherein the curvilinear profile of the forward edge (33) of the tailgate opening lower surface substantially matches the curvilinear profile of a substantial part of the rear edge (29) of the luggage board (5) when the luggage board is in the first and second orientations;
and the luggage board (5) has a width across the vehicle (V) greater than the width of the tailgate opening lower surface;
**characterized in that**:
the longitudinal centre line (CL_{B}) of the luggage board (5) is offset from the longitudinal centre line (CLv) of the vehicle (V) in both first and second orientations of the luggage board; and **in that**:
the forward edge (33) of the tailgate opening lower surface is asymmetrical about the longitudinal centre line (CLv) of the vehicle.

2. A vehicle (V) according to claim 1, wherein the tailgate opening lower surface is also asymmetrical about the longitudinal centre line (CL_{B}) of the luggage board (5).

3. A vehicle (V) according to claim 1 or claim 2, wherein the luggage storage space (1) is asymmetrical about the longitudinal centre line (CLv) of the vehicle (V).

4. A vehicle (V) according to any preceding claim, wherein the longitudinal centre line (CL_{B}) of the luggage board (5) is substantially parallel with the longitudinal centre line (CLv) of the vehicle.

5. A vehicle (V) according to any preceding claim, wherein the curvilinear profile of the forward edge (33) of the tailgate opening lower surface includes an arc; and wherein the centre point of the arc lies substantially on, or adjacent to, the longitudinal centre line (CL_{B}) of the luggage board (5).

6. A vehicle (V) according to any preceding claim, wherein a minimum depth (Dₘᵢₙ) of the tailgate opening lower surface is substantially aligned with the longitudinal centre line (CL_{B}) of the luggage board (5) in at least one of the first and second orientations; and wherein the minimum depth (Dₘᵢₙ) of the tailgate opening lower surface is substantially aligned with a maximum depth (Dₘₐₓ) of the luggage board (5) in at least one of the first and second orientations.

7. A vehicle (V) according to claim 6, wherein the minimum depth (Dₘᵢₙ) of the tailgate opening lower surface is offset from the longitudinal centre line (CLv) of the vehicle.

8. A vehicle (V) according to any one of the preceding claims, wherein the tailgate opening lower surface forward edge (33) includes a first end (EP_{R}), which is located on a first side of the longitudinal centre line (CLv) of the vehicle, and a second end (EP_{L}), which is located on a second side of the longitudinal centre line (CLv) of the vehicle; and wherein the luggage board (5) is dimensioned such that it extends beyond at least one of the first (EP_{R}) and second (EP_{L}) ends of the forward edge (33) of the tailgate opening lower surface in a transverse direction.

9. A vehicle (V) according to claim 8, wherein the first end (EP_{R}) is located further into the boot (1) in the forwards direction than the second end (EP_{L}).

10. A vehicle (V) according to any one of the preceding claims, wherein at least one lateral side (23, 25) of the luggage board (5) abuts a storage bin (WB_{L}, WB_{R}) located behind a wheel arch, or behind a trim element (WA_{L}, WA_{R}) that covers a wheel arch.

11. A vehicle (V) according to any one of the preceding claims, wherein the luggage board (5) includes a lifting handle (H);
said lifting handle being arranged substantially symmetrically about the longitudinal centre line (CLv) of the vehicle when the luggage board (5) is in the first orientation;
and wherein the centre of the lifting handle (H) is offset from the longitudinal centre line (CLv) of the vehicle when the luggage board (5) is in the second orientation.

12. A vehicle (V) according to claim 11, wherein the centre of the lifting handle (H) is offset from the longitudinal centre line (CL_{B}) of the luggage board (5).

13. A vehicle (V) according to any one of the preceding claims, including a second luggage board (3).

14. A vehicle (V) according to claim 13, wherein the first luggage board (5) is a rear luggage board and the second luggage board (3) is a front luggage board.

## Patentansprüche

1. Fahrzeug (V), das eine Mittellängslinie (CLv) aufweist und einen Gepäckablageraum (1) enthält, wobei der Ablageraum durch Folgendes begrenzt ist: eine vordere Kante (33) einer unteren Oberfläche einer Heckklappenöffnung, wobei die Kante ein kurvenförmiges Profil enthält; und durch ein Gepäckbrett (5), das eine Mittellängslinie (CL_{B}) aufweist und eine erste (19) und eine zweite (21) lasttragende Oberfläche aufweist, die jeweils angeordnet sind, eine Fläche bereitzustellen, auf der Gepäckartikel platziert werden können, wenn das Gepäckbrett (5) in einer ersten beziehungsweise einer zweiten Ausrichtung in dem Gepäckraum (1) platziert ist, und das eine hintere Kante (29) eines Gepäckbretts aufweist, das ein kurvenförmiges Profil enthält und im Wesentlichen um die Mittellängslinie (CL_{B}) des hinteren Gepäckbretts symmetrisch ist;
wobei das kurvenförmige Profil der vorderen Kante (33) der unteren Oberfläche der Heckklappenöffnung im Wesentlichen mit dem kurvenförmigen Profil eines wesentlichen Teils der hinteren Kante (29) des Gepäckbretts (5) übereinstimmt, wenn das Gepäckbrett sich in der ersten und der zweiten Ausrichtung befindet;
und das Gepäckbrett (5) eine Breite über das Fahrzeug (V) hinweg aufweist, die größer ist als die Breite der unteren Oberfläche der Heckklappenöffnung;
**dadurch gekennzeichnet, dass**:
die Mittellängslinie (CL_{B}) des Gepäckbretts (5) von der Mittellängslinie (CLv) des Fahrzeugs (V) in der ersten als auch der zweiten Ausrichtung des Gepäckbretts versetzt ist; und dadurch, dass:
die vordere Kante (33) der unteren Oberfläche der Heckklappenöffnung asymmetrisch um die Mittellängslinie (CLv) des Fahrzeugs ist.

2. Fahrzeug (V) nach Anspruch 1, wobei die untere Oberfläche der Heckklappenöffnung auch asymmetrisch um die Mittellängslinie (CL_{B}) des Gepäckbretts (5) ist.

3. Fahrzeug (V) nach Anspruch 1 oder 2, wobei der Gepäckablageraum (1) asymmetrisch um die Mittellängslinie (CLv) des Fahrzeugs (V) ist.

4. Fahrzeug (V) nach einem der vorhergehenden Ansprüche, wobei die Mittellängslinie (CL_{B}) des Gepäckbretts (5) im Wesentlichen parallel zur Mittellängslinie (CLv) des Fahrzeugs ist.

5. Fahrzeug (V) nach einem der vorhergehenden Ansprüche, wobei das kurvenförmige Profil der vorderen Kante (33) der unteren Oberfläche der Heckklappenöffnung einen Bogen enthält; und wobei der Mittelpunkt des Bogens im Wesentlichen auf oder neben der Mittellängslinie (CL_{B}) des Gepäckbretts (5) liegt.

6. Fahrzeug (V) nach einem der vorhergehenden Ansprüche, wobei eine Mindesttiefe (Dₘᵢₙ) der unteren Oberfläche der Heckklappenöffnung in der ersten und/oder der zweiten Ausrichtung im Wesentlichen an der Mittellängslinie (CL_{B}) des Gepäckbretts (5) ausgerichtet ist; und wobei die Mindesttiefe (Dₘᵢₙ) der unteren Oberfläche der Heckklappenöffnung in der ersten und/oder der zweiten Ausrichtung im Wesentlichen an einer Maximaltiefe (Dₘₐₓ) des Gepäckbretts (5) ausgerichtet ist.

7. Fahrzeug (V) nach Anspruch 6, wobei die Mindesttiefe (Dₘᵢₙ) der unteren Oberfläche der Heckklappenöffnung von der Mittellängslinie (CLv) des Fahrzeugs versetzt ist.

8. Fahrzeug (V) nach einem der vorhergehenden Ansprüche, wobei die vordere Kante (33) der unteren Oberfläche der Heckklappenöffnung ein erstes Ende (EP_{R}), das sich auf einer ersten Seite der Mittellängslinie (CLv) des Fahrzeugs befindet, und ein zweites Ende (EP_{L}), das sich auf einer zweiten Seite der Mittellängslinie (CLv) des Fahrzeugs befindet, enthält; und wobei das Gepäckbrett (5) derart bemessen ist, dass es sich in einer Querrichtung über das erste (EP_{R}) und/oder das zweite (EP_{L}) Ende der vorderen Kante (33) der unteren Oberfläche der Heckklappenöffnung hinaus erstreckt.

9. Fahrzeug (V) nach Anspruch 8, wobei das erste Ende (EP_{R}) sich in der Vorwärtsrichtung weiter in dem Kofferraum (1) befindet als das zweite Ende (EP_{L}).

10. Fahrzeug (V) nach einem der vorhergehenden Ansprüche, wobei wenigstens eine seitliche Seite (23, 25) des Gepäckbretts (5) an ein Ablagefach (WB_{L}, WB_{R}) anstößt, das sich hinter einem Radlauf oder hinter einem Verkleidungselement (WA_{L}, WA_{R}), das einen Radlauf bedeckt, befindet.

11. Fahrzeug (V) nach einem der vorhergehenden Ansprüche, wobei das Gepäckbrett (5) einen Hebegriff (H) enthält;
wobei der Hebegriff im Wesentlichen symmetrisch um die Mittellängslinie (CLv) des Fahrzeugs angeordnet ist, wenn das Gepäckbrett (5) sich in der ersten Ausrichtung befindet;
und wobei die Mitte des Hebegriffs (H) von der Mittellängslinie (CLv) des Fahrzeugs versetzt ist, wenn das Gepäckbrett (5) sich in der zweiten Ausrichtung befindet.

12. Fahrzeug (V) nach Anspruch 11, wobei die Mitte des Hebegriffs (H) von der Mittellängslinie (CL_{B}) des Gepäckbretts (5) versetzt ist.

13. Fahrzeug (V) nach einem der vorhergehenden Ansprüche, das ein zweites Gepäckbrett (3) enthält.

14. Fahrzeug (V) nach Anspruch 13, wobei das erste Gepäckbrett (5) ein hinteres Gepäckbrett ist und das zweite Gepäckbrett (3) ein vorderes Gepäckbrett ist.

## Revendications

1. Véhicule (V) ayant une ligne centrale longitudinale (CLv) et incluant un compartiment de stockage de bagages (1), ledit compartiment de stockage étant délimité par un bord avant (33) d'une surface inférieure d'ouverture de hayon, lequel bord inclut un profil curviligne ; et par une planche à bagages (5) ayant une ligne centrale longitudinale (CL_{B}) et ayant des première (19) et seconde (21) surfaces porteuses de charge qui sont chacune agencées pour fournir une zone sur laquelle des bagages peuvent être placés lorsque la planche à bagages (5) est placée dans le compartiment à bagages (1) dans des première et seconde orientations respectivement, et ayant un bord arrière de planche à bagages (29) qui inclut un profil curviligne, et est sensiblement symétrique autour de la ligne centrale longitudinale (CL_{B}) de la planche à bagages arrière ;
dans lequel le profil curviligne du bord avant (33) de la surface inférieure d'ouverture de hayon concorde sensiblement avec le profil curviligne d'une partie substantielle du bord arrière (29) de la planche à bagages (5) lorsque la planche à bagages est dans les première et seconde orientations ;
et la planche à bagages (5) a une largeur à travers le véhicule (V) supérieure à la largeur de la surface inférieure d'ouverture de hayon ;
**caractérisé en ce que** :
la ligne centrale longitudinale (CL_{B}) de la planche à bagages (5) est décalée de la ligne centrale longitudinale (CLv) du véhicule (V) à la fois dans les première et seconde orientations de la planche à bagages ; et **en ce que** :
le bord avant (33) de la surface inférieure d'ouverture de hayon est asymétrique autour de la ligne centrale longitudinale (CLv) du véhicule.

2. Véhicule (V) selon la revendication 1, dans lequel la surface inférieure d'ouverture de hayon est également asymétrique autour de la ligne centrale longitudinale (CL_{B}) de la planche à bagages (5).

3. Véhicule (V) selon la revendication 1 ou la revendication 2, dans lequel le compartiment de stockage de bagages (1) est asymétrique autour de la ligne centrale longitudinale (CLv) du véhicule (V).

4. Véhicule (V) selon l'une quelconque des revendications précédentes, dans lequel la ligne centrale longitudinale (CL_{B}) de la planche à bagages (5) est sensiblement parallèle à la ligne centrale longitudinale (CLv) du véhicule.

5. Véhicule (V) selon l'une quelconque des revendications précédentes, dans lequel le profil curviligne du bord avant (33) de la surface inférieure d'ouverture de hayon inclut un arc ; et dans lequel le point central de l'arc se trouve sensiblement sur, ou adjacent à, la ligne centrale longitudinale (CL_{B}) de la planche à bagages (5).

6. Véhicule (V) selon l'une quelconque des revendications précédentes, dans lequel une profondeur minimale (Dₘᵢₙ) de la surface inférieure d'ouverture de hayon est sensiblement alignée avec la ligne centrale longitudinale (CL_{B}) de la planche à bagages (5) dans au moins l'une des première et seconde orientations ; et dans lequel la profondeur minimale (Dₘᵢₙ) de la surface inférieure d'ouverture de hayon est sensiblement alignée avec une profondeur maximale (Dₘₐₓ) de la planche à bagages (5) dans au moins l'une des première et seconde orientations.

7. Véhicule (V) selon la revendication 6, dans lequel la profondeur minimale (Dₘᵢₙ) de la surface inférieure d'ouverture de hayon est décalée de la ligne centrale longitudinale (CLv) du véhicule.

8. Véhicule (V) selon l'une quelconque des revendications précédentes, dans lequel le bord avant (33) de surface inférieure d'ouverture de hayon inclut une première extrémité (EP_{R}), qui est située sur un premier côté de la ligne centrale longitudinale (CLv) du véhicule, et une seconde extrémité (EP_{L}), qui est située sur un second côté de la ligne centrale longitudinale (CLv) du véhicule ; et dans lequel la planche à bagages (5) est dimensionnée de façon à s'étendre au-delà d'au moins l'une des première (EP_{R}) et seconde (EP_{L}) extrémités du bord avant (33) de la surface inférieure d'ouverture de hayon dans une direction transversale.

9. Véhicule (V) selon la revendication 8, dans lequel la première extrémité (EP_{R}) est située davantage dans le coffre (1) dans la direction vers l'avant que la seconde extrémité (EP_{L}).

10. Véhicule (V) selon l'une quelconque des revendications précédentes, dans lequel au moins un côté latéral (23, 25) de la planche à bagages (5) bute contre un bac de stockage (WB_{L}, WB_{R}) situé derrière un passage de roue, ou derrière un élément de garniture (WA_{L}, WA_{R}) qui couvre un passage de roue.

11. Véhicule (V) selon l'une quelconque des revendications précédentes, dans lequel la planche à bagages (5) comporte une poignée de levage (H) ;
ladite poignée de levage étant agencée sensiblement symétrique autour de la ligne centrale longitudinale (CLv) du véhicule lorsque la planche à bagages (5) est dans la première orientation ;
et dans lequel le centre de la poignée de levage (H) est décalé de la ligne centrale longitudinale (CLv) du véhicule lorsque la planche à bagages (5) est dans la seconde orientation.

12. Véhicule (V) selon la revendication 11, dans lequel le centre de la poignée de levage (H) est décalé de la ligne centrale longitudinale (CL_{B}) de la planche à bagages (5).

13. Véhicule (V) selon l'une quelconque des revendications précédentes, incluant une seconde planche à bagages (3).

14. Véhicule (V) selon la revendication 13, dans lequel la première planche à bagages (5) est une planche à bagages arrière et la seconde planche à bagages (3) est une planche à bagages avant.
